# EUROPEAN PATENT SPECIFICATION

(11) **EP 3 846 628 B1**
(45) Date of publication and mention of the grant of the patent: **09.03.2022**
(21) Application number: 19750087.9
(22) Date of filing: 30.07.2019
(51) Int. Cl.: A21B 3/02, F24C 15/02, F24C 15/14

(54) **A COOKING DEVICE COMPRISING A SEALING ELEMENT**
KOCHVORRICHTUNG MIT EINEM DICHTUNGSELEMENT
DISPOSITIF DE CUISSON COMPRENANT UN ÉLÉMENT D'ÉTANCHÉITÉ

(30) Priority: 06.09.2018 TR 201812747
(43) Date of publication of application: 14.07.2021
(73) Proprietor: Arçelik Anonim Sirketi, 34445 Istanbul (TR)
(72) Inventor: SABAH, Fatih, 34950 ISTANBUL (TR); CENGIZ, Osman, 34950 ISTANBUL (TR); YILDIRIM, Kenan, 34950 ISTANBUL (TR); YAMAN, Yalcin, 34950 ISTANBUL (TR); KARAER, Erol, 34950 ISTANBUL (TR)
(86) International application number: PCT/EP2019/070478
(87) International publication number: WO 2020/048689

(56) References cited:
- EP-A1- 2 340 714
- EP-A1- 3 045 820
- DE-A1-102004 020 181
- DE-A1-102005 024 426
- DE-A1-102016 224 305
- DE-U1- 9 310 845

## Description

The present invention relates to a cooking device comprising a sealing element.

In ovens, the cooking process is performed by dissipating the heat generated by the heater into the cooking device by means of the fan. The air in the cooking device is heated by the heater and then dissipated by means of the fans. The cooking process is performed in the cooking cavity. A door prevents the cooking cavity from getting in contact with the outer environment. Thus, the temperature in the cooking cavity is increased so as to cook the foodstuffs. In order to provide the homogeneous cooking of the foodstuffs, ovens providing steam cooking are used. By means of the steam, the foodstuffs are cooked without getting dried due to hot air, and the foodstuffs are cooked in a more soft and homogeneous manner. For steam cooking, steam is delivered into the cooking cavity. The intense steam in the cooking cavity hits the walls of the cooking cavity and the door to condensate thereon, creating water droplets. Therefore, water may accumulate on the door and on the gasket disposed between the cooking cavity and the door. When the user opens the door to reach the foodstuffs, the accumulated water droplets scatter and most of the time get in contact with the foodstuffs. This situation causes user dissatisfaction.

In the United States of America Patent Application No. US4223660, different types of gasket between the door and the cooking cavity are disclosed. Further relevant state of the art is found in documents DE 10 2005 024426 A1, DE 93 10 845 U1 and DE 10 2004 020181 A1, whereby the first document discloses all features of the preamble of claim 1.

The aim of the present invention is the realization of a cooking device which provides ease of use.

The cooking device realized in order to attain the aim of the present invention, explicated in the first claim and the respective claims thereof, comprises a body; a cooking cavity wherein the foodstuffs are cooked; a casing which surrounds the cooking cavity; a heater which is provided in the cooking cavity and which provides the heating of the foodstuffs; and a door which interrupts the contact between the cooking cavity and the outer environment such that the heater cooks the foodstuffs in the cooking cavity. The door has a closed position for interrupting the contact between the cooking cavity and the outer environment, and an open position for enabling the user to access the foodstuffs.

The cooking device of the present invention comprises a sealing element which is positioned between the cooking cavity and the door when the door is in the closed position, and an opening which is arranged on the sealing element. By means of the opening, the water droplets accumulated on the sealing element are moved away from the cooking cavity.

In an embodiment of the present invention, the cooking device comprises the U-shaped sealing element. Thus, the water droplets around the cooking cavity are accumulated in the sealing element.

According to the present invention, the cooking device comprises a first receptacle which is disposed under the sealing element and a second receptacle which is disposed on the door. The fluid passing through the opening is collected in the first receptacle. The second receptacle is close to the lower portion of the door. The water droplets on the door are collected in the second receptacle.

According to the present invention, the cooking device comprises a discharge opening which is arranged on the first receptacle. By means of the discharge opening, the fluid collected on the first receptacle is moved away from the inner environment.

In an embodiment of the present invention, the cooking device comprises a shutter which is arranged on the second receptacle. When the door is in the closed position, the shutter hits the first receptacle, and thus the water collected on the second receptacle is transferred into the first receptacle.

In an embodiment of the present invention, the cooking device comprises a discharge line with one end positioned over the discharge opening. By means of the discharge line, the fluid collected on the first receptacle is moved away from the inner environment.

In an embodiment of the present invention, the first receptacle and the second receptacle can be attached/detached by the user. Thus, the liquid collected on the first receptacle and the second receptacle can be emptied by the user.

In an embodiment of the present invention, the cooking device comprises at least one tank which is arranged under the cooking cavity. The water collected in the first receptacle and the second receptacle is transferred into the tank. By means of the heat generated in the cooking cavity by the heater, the water collected in the tank is vaporized.

By means of the present invention, a cooking device is realized, wherein the steam is efficiently moved away from the cooking cavity.

The cooking device realized in order to attain the aim of the present invention is illustrated in the attached figures, where:

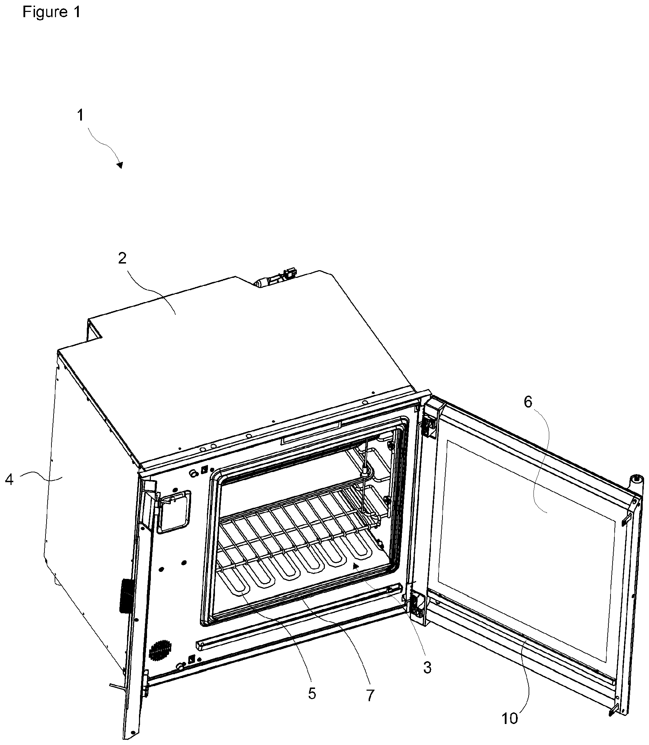

Figure 1 - is the perspective view of the cooking device.

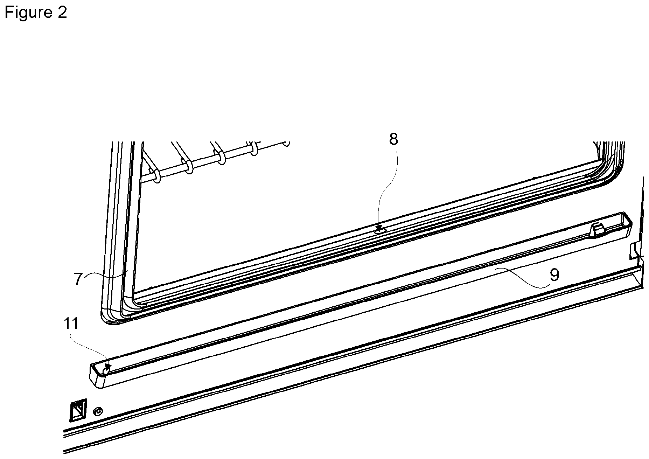

Figure 2 - is the cross-sectional view of the cooking device.

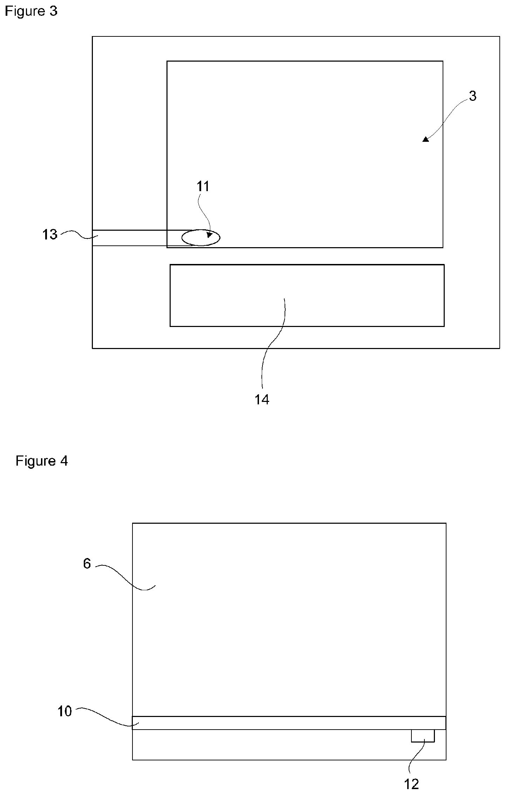

Figure 3 - is the schematic view of the cooking device.
Figure 4 - is the schematic view of the door.

The elements illustrated in the figures are numbered as follows:
1. Cooking device
2. Body
3. Cooking cavity
4. Casing
5. Heater
6. Door
7. Sealing element
8. Opening
9. First receptacle
10. Second receptacle
11. Discharge opening
12. Shutter
13. Discharge line
14. Tank

The cooking device (1) comprises a body (2); a cooking cavity (3) which is disposed in the body (2) and wherein the foodstuffs to be cooked are placed; a casing (4) in the form of a box with the front side open which surrounds the cooking cavity (3); a heater (5) which is disposed in the cooking cavity (3) and which provides the cooking of the foodstuffs; and a door (6) which is disposed on the body (2) and which has a closed position for interrupting the contact between the cooking cavity (3) and the outer environment, and an open position for enabling the user to access the cooking cavity (3). When the door (6) is in the closed position, the inner volume of the cooking cavity (3) is heated by the heater (5) so as to cook the foodstuffs. When the door (6) is changed to the open position, the user can access the foodstuffs.

The cooking device (1) of the present invention comprises a sealing element (7) which is positioned between the cooking cavity (3) and the door (6) when the door (6) is in the closed position, and an opening (8) which is arranged on the sealing element (7). By means of the sealing element (7) which is used between the door (6) and the cooking cavity (3), the air in the cooking cavity (3) is prevented from going outside or the air in the outer environment is prevented from entering the cooking cavity (3). Thus, the temperature in the cooking cavity (3) is kept constant. During the steam cooking process, the water droplets formed by the steam hitting the walls of the cooking cavity (3) accumulate on the sealing element (7). By means of the opening (8), the accumulated water droplets leave the environment. Thus, the performance of the cooking process is increased and ease of use is provided.

In an embodiment of the present invention, the cooking device (1) comprises the U-shaped sealing element (7). By means of the U shape of the sealing element (7), the water droplets are easily collected on the sealing element (7).

In the present invention, the cooking device (1) comprises a first receptacle (9) which is disposed on the body (2) under the sealing element (7) and wherein the liquid passing through the opening (8) is collected, and a second receptacle (10) which is disposed on the door (6) and wherein the water droplets formed on the door (6) during the cooking process are collected. The liquid collected on the sealing element (7) is delivered to the first receptacle (9) by means of the opening. The water droplets formed on the door (6) after the steam hits the door (6) trickle down to be collected in the second receptacle (10). Thus, when the door (6) is changed to the open position, the water droplets on the door (6) are prevented from scattering.

In the present invention, the cooking device (1) comprises a discharge opening (11) which is arranged on the first receptacle (9) and which provides the discharge of the liquid collected on the first receptacle (9). By means of the discharge opening (11), the water collected on the first receptacle (9) is moved away from the inner environment. The liquid is moved away from the cooking cavity (3) without the user getting in contact with the liquid. Thus, ease of use is provided.

In an embodiment of the present invention, the cooking device (1) comprises a shutter (12) which is disposed on the second receptacle (10) and which contacts the first receptacle (9) when the door (6) is in the closed position such that the water in the second receptacle (10) is transferred into the first receptacle (9). While the door (6) is changed to the closed position, the shutter (12) hits the first receptacle (9), and thus the water collected on the second receptacle (10) is transferred into the first receptacle (9). Consequently, the water in the second receptacle (10) is transferred into the first receptacle (9) and then discharged from there through the discharge opening (11).

In an embodiment of the present invention, the cooking device (1) comprises a discharge line (13) with one end positioned over the discharge opening (11) and the other end outside the body (2) and which provides the discharge of the liquid collected on the first receptacle (9). The discharge line (13) is connected to the discharge opening (11) on the first receptacle (9). The discharge line (13) enables the water on the first receptacle (9) to be delivered to the mains outlet so as to be moved away from the cooking device (1).

In an embodiment of the present invention, the cooking device (1) comprises the first receptacle (9) and the second receptacle (10) which can be attached/detached by the user. The first receptacle (9) and the second receptacle (10) can be easily detached by the user to be emptied and cleaned. Thus, foodstuff wastes such as oil, etc. carried with the water droplets are moved away from the environment.

In an embodiment of the present invention, the cooking device (1) comprises at least one tank (14) which is disposed under the cooking cavity (3), which receives the water collected in the first receptacle (9) and which can attached/detached by the user. The tank (14) is positioned under the cooking cavity (3). By means of the heater (5) being operated in the cooking cavity (3), heat is transferred to the tank (14). Thus, the liquid collected in the tank (14) is vaporized and moved away from the cooking device (1). The tank (14) can be easily detached and cleaned by the user.

By means of the present invention, a cooking device (1) is realized, comprising a sealing element (7) which ensures that the water droplets formed as the steam hits the walls of teh cooking cavity (3) and the door (6) during the steam cooking process are moved away from the environment without getting in contact with the foodstuffs. By means of an opening (8) arranged on the sealing element (7), the liquid is delivered to the first receptacle (9) positioned under the sealing element (7). The water droplets on the door (6) are collected in the second receptacle (10). The water droplets collected in the first receptacle (9) and the second receptacle (10) are moved away from the environment by means of the discharge line (13) or the user without getting in contact with the foodstuffs.

## Claims

1. A cooking device (1) **comprising** a body (2); a cooking cavity (3) which is disposed in the body (2) and wherein the foodstuffs to be cooked are placed; a casing (4) in the form of a box with the front side open which surrounds the cooking cavity (3); a heater (5) which is disposed in the cooking cavity (3) and which provides the cooking of the foodstuffs; a door (6) which is disposed on the body (2) and which has a closed position for interrupting the contact between the cooking cavity (3) and the outer environment, and an open position for enabling the user to access the cooking cavity (3); a sealing element (7) which is positioned between the cooking cavity (3) and the door (6) when the door (6) is in the closed position and at least one opening (8) which is arranged on the sealing element (7) and which enables the liquid collected upon the condensation of the steam formed during the cooking process to be moved away from the cooking cavity (3); a first receptacle (9) which is disposed on the body (2) under the sealing element (7) and wherein the liquid passing through the opening (8) is collected, **characterized by** a second receptacle (10) which is disposed on the door (6) and wherein the water droplets formed on the door (6) during the cooking process are collected, and a discharge opening (11) which is arranged on the first receptacle (9) and which provides the discharge of the liquid collected on the first receptacle (9).

2. A cooking device (1) as in Claim 1, **characterized by** the sealing element (7) which is in the U form.

3. A cooking device (1) as in Claim 1 or Claim 2, **characterized by** a shutter (12) which is disposed on the second receptacle (10) and which contacts the first receptacle (9) when the door (6) is in the closed position such that the water in the second receptacle (10) is transferred into the first receptacle (9).

4. A cooking device (1) as in any one of preceding claims, **characterized by** a discharge line (13) with one end positioned over the discharge opening (11) and the other end outside the body (2) and which provides the discharge of the liquid collected on the first receptacle (9).

5. A cooking device (1) as in any one of preceding claims, **characterized by** the first receptacle (9) and the second receptacle (10) which can be attached/detached by the user.

6. A cooking device (1) as in any one of preceding claims, **characterized by** at least one tank (14) which is disposed under the cooking cavity (3), which receives the water collected in the first receptacle (9) and which can be attached/detached by the user.

## Patentansprüche

1. Ein Kochgerät (1) **umfasst** einen Körper (2), einen Garraum (3), der in dem Körper (2) angeordnet ist und in dem die zu kochenden Lebensmittel platziert werden; ein Gehäuse (4) in Form eines Kastens mit offener Vorderseite, der den Garraum (3) umgibt; eine Heizvorrichtung (5), die in dem Garraum (3) angeordnet ist und das Garen der Nahrungsmittel bereitstellt; eine Tür (6), die an dem Körper (2) angeordnet ist und eine geschlossene Position zum Unterbrechen des Kontakts zwischen dem Garraum (3) und der äußeren Umgebung und eine offene Position hat, um dem Benutzer den Zugang zum Garraum (3) zu ermöglichen; ein Dichtungselement (7), das zwischen dem Garraum (3) und der Tür (6) positioniert ist, wenn sich die Tür (6) in der geschlossenen Position befindet, und mindestens eine Öffnung (8), die an dem Dichtungselement (7) angeordnet ist und die es ermöglicht, die bei der Kondensation des während des Kochvorgangs gebildeten Dampfes gesammelte Flüssigkeit von dem Kochraum (3) wegzubewegen; einen ersten Behälter (9), der am Körper (2) unter dem Dichtungselement (7) angeordnet ist und in dem die durch die Öffnung (8) tretende Flüssigkeit gesammelt wird, **gekennzeichnet ist es durch** einen zweiten Behälter (10), der an der Tür (6) angeordnet ist und in dem die während des Kochvorgangs an der Tür (6) gebildeten Wassertropfen gesammelt werden und eine am ersten Behälter (9) angeordnete Abflussöffnung (11), die für den Abfluss der am ersten Behälter (9) gesammelten Flüssigkeit sorgt.

2. Ein Kochgerät (1), wie in Anspruch 1 aufgeführt, **ist dadurch gekennzeichnet, dass** es einen U-förmigen Dichtungselement (7) aufweist.

3. Ein Kochgerät (1), wie in Anspruch 1 oder 2 aufgeführt, **ist dadurch gekennzeichnet, dass** ein Verschluss (12) an dem zweiten Behälter (10) angeordnet ist und den ersten Behälter (9) berührt, wenn sich die Tür (6) in der geschlossenen Position befindet, so dass das Wasser in dem zweiten Behälter (10) in den ersten Behälter (9) überführt wird.

4. Ein Kochgerät (1), wie in einem der vorherigen Ansprüchen aufgeführt, **ist dadurch gekennzeichnet, dass** eine Abflussleitung (13), dessen eines Ende über der Abflussöffnung (11) und anderes Ende außerhalb des Körpers (2) positioniert ist und den Abfluss der auf dem ersten Behälter (9) gesammelten Flüssigkeit bereitstellt.

5. Ein Kochgerät (1), wie in einem der vorherigen Ansprüchen aufgeführt, **ist dadurch gekennzeichnet, dass** die erste Aufnahme (9) und die zweite Aufnahme (10) vom Benutzer angebracht/abgenommen werden können.

6. Ein Kochgerät (1), wie in einem der vorherigen Ansprüchen aufgeführt, **ist dadurch gekennzeichnet, dass** mindestens ein Tank (14) unter dem Garraum (3) angeordnet ist, der das in dem ersten Behälter (9) gesammelte Wasser aufnimmt und der vom Benutzer angebracht/abgenommen werden kann.

## Revendications

1. Un appareil de cuisson (1) **comprenant** un corps (2) ; une cavité de cuisson (3) qui est disposée dans le corps (2) et dans laquelle sont placés les aliments à cuire ; une enveloppe (4) en forme de boîte avec la face avant ouverte, qui entoure la cavité de cuisson (3) ; un réchauffeur (5) qui est disposé dans la cavité de cuisson (3) et qui permet la cuisson des aliments ; une porte (6) qui est disposée sur le corps (2) et qui prend une position fermée pour interrompre le contact entre la cavité de cuisson (3) et l'environnement extérieur, et une position ouverte pour permettre à l'utilisateur d'accéder à la cavité de cuisson (3) ; un élément d'étanchéité (7) qui est positionné entre la cavité de cuisson (3) et la porte (6) lorsque la porte (6) est en position fermée et au moins une ouverture (8) qui est agencée sur l'élément d'étanchéité (7) et qui permet d'éloigner le liquide recueilli par la condensation de la vapeur formée lors de la cuisson, hors de la cavité de cuisson (3) ; un premier réceptacle (9) qui est disposé sur le corps (2) sous l'élément d'étanchéité (7) et dans lequel le liquide passant par l'ouverture (8) est recueilli, **caractérisé par** un deuxième réceptacle (10) qui est disposé sur la porte (6) et dans lequel les gouttelettes d'eau formées sur la porte (6) pendant le processus de cuisson sont collectées, et une ouverture de déchargement (11) qui est agencée sur le premier réceptacle (9) et qui assure la décharge du liquide recueilli dans sur le premier réceptacle (9).

2. Un appareil de cuisson (1) selon la Revendication 1, **caractérisé par** l'élément d'étanchéité (7) qui est en forme de U.

3. Un appareil de cuisson (1) selon la Revendication 1 ou la Revendication 2, **caractérisé par** un obturateur (12) qui est disposé sur le deuxième réceptacle (10) et qui est en contact avec le premier réceptacle (9) lorsque la porte (6) est en position fermée de sorte à ce que l'eau du deuxième réceptacle (10) soit transférée dans le premier réceptacle (9).

4. Un appareil de cuisson (1) selon l'une quelconque des revendications précédentes, **caractérisé par** une conduite de décharge (13) avec une extrémité positionnée au-dessus de l'ouverture de déchargement (11) et l'autre extrémité à l'extérieur du corps (2) et qui assure la décharge du liquide recueilli dans le premier réceptacle (9).

5. Un appareil de cuisson (1) selon l'une quelconque des revendications précédentes, **caractérisé par** le premier réceptacle (9) et le deuxième réceptacle (10) qui peuvent être reliés/séparés par l'utilisateur.

6. Un appareil de cuisson (1) selon l'une quelconque des revendications précédentes, **caractérisé par** au moins un réservoir (14) qui est disposé sous la cavité de cuisson (3), qui reçoit l'eau recueillie dans le premier réceptacle (9) et qui peut être relié/séparé par l'utilisateur.
